# EUROPÄISCHE PATENTSCHRIFT

(11) **EP 3 924 796 B1**
(45) Veröffentlichungstag und Bekanntmachung des Hinweises auf die Patenterteilung: **20.09.2023**
(21) Anmeldenummer: 20703963.7
(22) Anmeldetag: 03.02.2020
(51) Int. Cl.: G05D 1/02

(54) **VERFAHREN UND SYSTEM ZUR BEGRENZUNG UND ÜBERWACHUNG MINDESTENS EINES ARBEITSBEREICHS FÜR ZUMINDEST EIN AUTONOM BETRIEBENES FAHRZEUG**
METHOD AND SYSTEM FOR DELIMITING AND MONITORING AT LEAST ONE WORKING AREA FOR AT LEAST ONE AUTONOMOUSLY OPERATED VEHICLE
PROCÉDÉ ET SYSTÈME DE DÉLIMITATION ET DE SURVEILLANCE D'AU MOINS UNE ZONE DE TRAVAIL POUR AU MOINS UN VÉHICULE AUTONOME

(30) Priorität: 11.02.2019 DE 102019201692
(43) Veröffentlichungstag der Anmeldung: 22.12.2021
(73) Patentinhaber: ZF Friedrichshafen AG, 88046 Friedrichshafen (DE)
(72) Erfinder: AMANN, Michael, 88069 Tettnang (DE); HIEMER, Marcus, 88074 Meckenbeuren (DE)
(74) Vertreter: ZF Friedrichshafen AG
(86) Internationale Anmeldenummer: PCT/EP2020/052544
(87) Internationale Veröffentlichungsnummer: WO 2020/164937

(56) Entgegenhaltungen:
- US-A1- 2013 110 322
- US-A1- 2014 379 196

## Beschreibung

Die vorliegende Erfindung betrifft ein Verfahren sowie ein System zur Begrenzung und Überwachung mindestens eines Arbeitsbereichs für zumindest ein autonom betriebenes Fahrzeug.

Aus der DE 10 259 168 A1 geht ein Verfahren zum Steuern wenigstens eines autonom fahrenden Fahrzeuges auf einer begrenzten Verkehrsfläche hervor, wobei das autonome Fahrzeug eine Fahreinrichtung zum Durchführen von Fahrbefehlen aufgrund von zugeführten Signalen aufweist. Die Fahrbefehle betreffen sowohl Fahrtrichtung als auch Fahrgeschwindigkeit. Das Fahrzeug ermittelt seine aktuelle Position mittels einer Positionsbestimmungseinrichtung und übermittelt diese an eine Betriebsleitstelle. In der Betriebsleitstelle wird aus den Positionssignalen anhand vorgebbarer Kriterien ein zu fahrendes Streckenprofil ermittelt und an die Fahreinrichtung des Fahrzeugs übermittelt, wobei die Fahreinrichtung die zum Fahren des Streckenprofils erforderlichen Fahrbefehle erzeugt.

US 2013 / 110 322 A1 betrifft ein Verfahren und ein System zur Steuerung eines Roboter-Gartenwerkzeugs um einen Arbeitsbereich in einem grenzdrahtgestützten System. Das System umfasst das Roboter-Gartenwerkzeug zur Durchführung einer Operation innerhalb des Arbeitsbereichs, der zumindest teilweise durch eine Grenze definiert ist. Das Roboter-Gartenwerkzeug umfasst auch Erkennungsmittel zur Erkennung einer Grenze. Darüber hinaus ist das Roboter-Gartengerät so angepasst, dass es ein Statussignal empfängt, das von einer Signalquelle gesendet wird, und das Roboter-Gartengerät ist so konfiguriert, dass es den Betrieb stoppt, wenn das Statussignal ein Stoppsignal liefert.

Aus US 2014 / 379 196 A1 ist ein Roboter-Mäher-Navigationssystem bekannt, welches eine Vielzahl von Sensoren an einem Mähroboter umfasst, die Stärke und Polarität eines Magnetfeldes von einem elektrischen Strom durch einen Grenzdraht erfassen. Eine elektronische Steuereinheit empfängt Daten über das Magnetfeld von der Vielzahl von Sensoren, während der Mähroboter dem Grenzdraht folgt, die Daten mit einem Referenzmuster vergleicht, das mindestens ein bestimmtes Merkmal des Grenzdrahtes definiert, und dem Mähroboter basierend auf dem Vergleich Befehle erteilt. Die elektronische Steuereinheit kann dem Mähroboter befehlen, einem zweiten Grenzdraht zu einer entfernten Ladestation anstelle des ersten Grenzdrahtes zu folgen.

Der vorliegenden Erfindung liegt ausgehend vom Stand der Technik die Aufgabe zu Grunde, ein Verfahren und ein System zur Begrenzung und Überwachung mindestens eines Arbeitsbereichs für zumindest ein autonom betriebenes Fahrzeug bereitzustellen, mittels dessen ein Fahrbetrieb des jeweiligen Fahrzeugs sicherer gestaltet wird. Die Aufgabe wird gelöst durch den Gegenstand der Patentansprüche 1 und 6. Weitere vorteilhafte Ausführungsformen sind den abhängigen Ansprüchen zu entnehmen.

Nach einem erfindungsgemäßen Verfahren zur Begrenzung und Überwachung mindestens eines Arbeitsbereichs für zumindest ein autonom betriebenes Fahrzeug wird eine außerhalb des Fahrzeugs angeordnete Sende- und Empfängereinheit mit zumindest einer Signalschleife, durch die der jeweilige Arbeitsbereich begrenzt wird, signaltechnisch verbunden, wobei die Sende- und Empfängereinheit zur Überwachung des Arbeitsbereichs ein Ausgangs-Signal durch die Signalschleife sendet und mit einem aus der Signalschleife empfangenen Eingangs-Signal vergleicht, wobei die Sende- und Empfängereinheit bei einer Abweichung zwischen dem Ausgangs- und Eingangssignal eine Fehlfunktion der Signalschleife feststellt und daraus folgend einen Sicherungsablauf für den autonomen Fahrbetrieb des zumindest einen Fahrzeugs einleitet. Durch das Verfahren wird ein Betrieb des zumindest einen autonom betriebenen Fahrzeugs sicherer gestaltet, wobei Fehlfunktionen der jeweiligen Signalschleife, wie Störungen, Kurzschlüsse, Ausfälle, Unterbrechungen oder Störsignale durch die Sende- und Empfängereinheit erkennbar gemacht werden. Anhand der Feststellung zur Fehlfunktion wird ein entsprechender Sicherungsablauf initiiert. Der Sicherungsablauf kann beispielsweise ein Abbremsen oder ein komplettes Deaktivieren des jeweiligen Fahrzeugs sein. Damit wird vorteilhafterweise die Sicherheit des Fahrbetriebs des jeweiligen autonom betriebenen Fahrzeugs erhöht. Beispielsweise wird ein vordefinierter Sicherungsablauf für eine bestimmte Fehlfunktion der Signalschleife vorbestimmt.

Als Fahrzeuge im Sinne der Erfindung sind vorzugsweise Arbeitsmaschinen, landwirtschaftliche Nutzfahrzeuge bzw. Maschinen (Landtechnik) sowie Nutzfahrzeuge im Hafenbetrieb zu verstehen, die autonom betrieben werden. Die Fahrzeuge haben gemeinsam, dass diese in einem Off-Road-Umfeld betrieben werden.

Die Sende- und Empfängereinheit ist derart eingerichtet, dass sie zum einen ein Ausgangs-Signal in die jeweilige Signalschleife eingeben bzw. einprägen kann und zum anderen das Ausgangs-Signal wieder empfangen kann, und zwar als Eingangs-Signal. Dabei bildet die Sende- und Empfängereinheit gemeinsam mit der Signalschleife einen Kreislauf aus, wobei die Sende- und Empfängereinheit das Ausgangs-Signal in die Signalschleife einleitet und anschließend eben dieses Signal als Eingangs-Signal wieder aufnimmt. Anders gesagt weist die Sende- und Empfängereinheit eine Senderseite und eine Empfängerseite auf, wobei die Sender- und Empfängerseite jeweils mit einer Steuereinheit zur Durchführung des Vergleichs der Signale bestückt sein können. Demnach wird das Ausgangs-Signal senderseitig versendet und empfängerseitig als Eingangs-Signal empfangen.

In einem fehlerfreien Verlauf durch die jeweilige Signalschleife geht das Ausgangs-Signal unverfälscht bzw. unverändert bzw. unbeeinflusst zurück in die Sende- und Empfängereinheit ein. Mithin entspricht das Ausgangs-Signal dann dem Eingangs-Signal. In einem fehlerbehafteten Verlauf des Signals durch die jeweilige Signalschleife wird das Ausgangs-Signal beispielsweise abgebrochen bzw. verändert bzw. beeinflusst, sodass das Eingangs-Signal nicht mehr dem ursprünglich in die Signalschleife eingeleiteten Ausgangs-Signal entspricht, sodass eine Fehlfunktion der Signalschleife vorliegt, die von der Sende- und Empfängereinheit festgestellt wird.

Vorzugsweise sind das Ausgangs-Signal und das Eingangs-Signal ein analoges oder digitales Signal. Ein analoges Signal ist beispielsweise ein Signal mit unterschiedlichen Spannungspegeln oder ein Sinus-Signal mit vordefinierter Frequenz. Als digitales Signal sind sogenannte pulsweitenmodulierte (PWM) Signale denkbar. Darüber hinaus ist ebenfalls möglich ein Kommunikationsprotokoll in Form eines BUS-Protokolls einzusetzen.

Bevorzugt wird das Ausgangs-Signal von der Sende- und Empfängereinheit kontinuierlich oder zu definierten Zeitpunkten versendet. Dadurch kann je nach Signaltyp und/oder Anforderungsprofil an das System ein geeignetes, das heißt entweder ein gepulstes oder durchgehendes Ausgangs-Signal generiert werden.

Das jeweilige Fahrzeug wird vorzugsweise in zumindest einen der Arbeitsbereiche kodiert. Ein Arbeitsbereich ist eine Fläche, auf der sich das jeweilige autonom betriebene Fahrzeug bewegen kann, wobei die Fläche durch eine dazugehörige Signalschleife begrenzt ist.

Unter einer Kodierung des Fahrzeugs ist zu verstehen, dass das jeweilige Fahrzeug zunächst in den jeweiligen Arbeitsbereich platziert wird und anschließend im Bezug auf das jeweilige Ausgangs-Signal der Sende- und Empfängereinheit und der den Arbeitsbereich begrenzenden Signalschleife sozusagen eingebucht wird. Damit ist das jeweilige kodierte Fahrzeug ausschließlich in demjenigen Arbeitsbereich betreibbar und fahrbar, in dem es registriert bzw. eingebucht ist.

Ein Annähern oder ein Überfahren des jeweiligen Fahrzeugs an bzw. über die Signalschleife bewirkt die genannte Fehlfunktion, die den Sicherungsablauf für den autonomen Fahrbetrieb des zumindest einen Fahrzeugs einleitet. Vorzugsweise umfasst der Sicherungsablauf ein von der Sende- und Empfängereinheit ergehendes Befehlssignal an das zumindest eine Fahrzeug und/oder an eine externe Empfangsstation. Das jeweilige Fahrzeug oder die externe Empfangsstation sind vorzugsweise drahtlos mit der Sende- und Empfängereinheit verbunden. Dabei steht das Fahrzeug z. B. in ständigem Kontakt mit der Sende- und Empfängereinheit. Zur Reduzierung der Bereitstellungskosten ist eine Kabelverbindung ebenfalls denkbar.

Stellt die Sende- und Empfängereinheit eine Fehlfunktion der jeweiligen Signalschleife fest, beispielsweise wenn das Ausgangs-Signal durch ein die Signalschleife überfahrendes Fahrzeug geändert oder beeinflusst wird, wird aufgrund der Abweichung des ursprünglichen Ausgangs-Signals zum Eingangs-Signal ein Befehlssignal erzeugt, welches entweder an das jeweilige Fahrzeug und/oder an die externe Empfangsstation gesendet wird. Die Empfangsstation kann beispielsweise eine Einrichtung eines Betreibers, ein PC oder ein Mobiltelefon sein. Dabei ist denkbar, dass der Betreiber über die Fehlfunktion informiert wird und ergänzend ferngesteuert auf den Fahrbetrieb des mindestens einen autonomen Fahrzeugs einwirken kann, um im Falle einer Fehlfunktion eine ausreichende Sicherheit des Systems zu gewährleisten.

Ergeht das Befehlssignal direkt an das jeweilige Fahrzeug, kann es nach Erhalt des Befehlssignals die Aktion, welche den entsprechenden Sicherungsablauf charakterisiert, ausführen. Dies kann sowohl ein selbstständiges Deaktivieren, ein Abbremsen bis zum Stillstand oder eine selbsttätige Änderung der Bewegungsroute des jeweiligen Fahrzeugs sein.

Gemäß einem erfindungsgemäßen System zur Begrenzung und Überwachung mindestens eines Arbeitsbereichs für zumindest ein autonom betriebenes Fahrzeug ist eine außerhalb des Fahrzeugs angeordnete Sende- und Empfängereinheit mit zumindest einer Signalschleife, die den jeweiligen Arbeitsbereich begrenzt, signaltechnisch verbunden, wobei die Sende- und Empfängereinheit zur Überwachung des Arbeitsbereichs ein Ausgangs-Signal durch die Signalschleife sendet und mit einem aus der Signalschleife empfangenen Eingangs-Signal vergleicht, wobei von der Sende- und Empfängereinheit bei einer Abweichung zwischen dem Ausgangs- und Eingangssignal eine Fehlfunktion der Signalschleife feststellbar und daraus folgend einen Sicherungsablauf für den autonomen Fahrbetrieb des zumindest einen Fahrzeugs einleitbar ist. Mithin handelt es sich dabei um ein aktives Begrenzungs- und Überwachungssystem, welches Fehlfunktionen der jeweiligen Signalschleife, wie Störungen, Ausfälle, Unterbrechungen oder Störsignale erkennt, und basierend auf diese Ermittlungen einen entsprechenden Sicherungsablauf initiiert. Das System kann beispielsweise bei Erntearbeiten in der Landwirtschaft oder für Transportarbeiten im Hafenbereich eingesetzt werden, wo ein autonomer Fahrbetrieb der im Arbeitsbereich angeordneten Fahrzeuge besonders hilfreich und effizient gestaltet werden kann.

Bevorzugt umfasst die jeweilige Signalschleife eine metallische Signalleitung. Die metallische Signalleitung ist vorzugsweise im Boden eingelassen und dient als Feldgrenze bzw. als Begrenzung des Arbeitsbereichs des jeweiligen Fahrzeugs. Das jeweilige in den Arbeitsbereich eingebuchte Fahrzeug ist derart eingerichtet, dass es bei Annäherung an die jeweilige Signalschleife dessen Ausgangs-Signal erkennt. Mit anderen Worten identifiziert das jeweilige Fahrzeug die metallische Signalleitung als Signalschleife. Vorteilhaft ist dabei, dass das Fahrzeug die Signalschleife von anderen metallischen Objekten, die eventuell im Boden vorhanden sind, unterscheiden kann. Mithin ist das System sicher gegenüber metallischen Störgegenständen ausgebildet.

Ferner bevorzugt umfasst das jeweilige Fahrzeug eine Sensoreinheit, um das Ausgangs-Signal der jeweiligen Signalschleife zu detektieren. Mittels der Sensoreinheit kann ferner die zuvor genannte Unterscheidung zwischen der Signalschleife und anderen metallischen Objekten erfolgen.

Nähert sich das jeweilige Fahrzeug der Signalschleife, wird dies von der Sensoreinheit des jeweiligen Fahrzeugs detektiert und an die Sende- und Empfängereinheit übermittelt. Darauf basierend kann der Fahrbetrieb des autonomen Fahrzeugs angepasst werden, sodass beispielsweise eine Richtungsänderung bzw. eine Änderung der Bewegungsroute des jeweiligen Fahrzeugs erfolgen kann. Durch die Sensoreinheit ist das Fahrzeug dazu ausgebildet, selbstständig zu ermitteln, ob es sich innerhalb der Signalschleife des jeweiligen Arbeitsbereichs befindet.

Erfindungsgemäß umfasst das jeweilige Fahrzeug einen Sender, der dazu eingerichtet ist, das Ausgangs-Signal der jeweiligen Signalschleife zumindest temporär zu beeinflussen. Unter dem Begriff "zumindest temporär" ist zu verstehen, dass das Ausgangs-Signal durch den Sender entweder für einen definierten Zeitraum verändert oder beeinflusst oder gänzlich geändert oder beeinflusst wird. Jedes Fahrzeug kann dabei ein spezifisches Signal aussenden, mit dem die jeweilige Signalschleife beeinflusst wird. Das System ist dabei eingerichtet, die Signaländerung zur exakten Identifizierung des jeweiligen Fahrzeugs zu nutzen und/oder von anderen Fahrzeugen zu unterscheiden. Mit anderen Worten wird die Überwachung der jeweiligen Signalschleife, die sozusagen als virtuelle Begrenzung oder Zaun für das jeweilige im Arbeitsbereich eingewählte bzw. kodierte Fahrzeug zu verstehen ist, nicht nur durch das Fahrzeug selbst, sondern auch redundant durch das System bzw. die Sende- und Empfängereinheit ausgeführt. Neben der Erhöhung der Sicherheit realisiert dies ferner eine fehlertolerante Überwachung des jeweiligen Arbeitsbereichs.

Gemäß einem Ausführungsbeispiel sind mehrere Arbeitsbereiche vorgesehen, die durch eine jeweilige Signalschleife begrenzt sind, wobei je mindestens zwei Arbeitsbereiche zumindest abschnittsweise überlagernd angeordnet sind, um einen Übergangsbereich zwischen mindestens zwei Arbeitsbereichen auszubilden. Am Beispiel von zwei Arbeitsbereichen mit einer jeweiligen Signalschleife können mindestens ein Fahrzeug im ersten Arbeitsbereich und mindestens ein weiteres Fahrzeug im zweiten Arbeitsbereich eingebucht sein. Mindestens ein drittes Fahrzeug kann ferner sowohl in den ersten als auch in den zweiten Arbeitsbereich kodiert sein. Mit anderen Worten ist das erste Fahrzeug dazu autorisiert, sich ausschließlich im ersten Arbeitsbereich zu bewegen. Es ist dem ersten Fahrzeug aufgrund der Begrenzung durch die erste Signalschleife nicht möglich aus dem ersten Arbeitsbereich herauszufahren, ohne eine Fehlfunktion der ersten Signalschleife auszulösen. Das zweite Fahrzeug ist autorisiert ausschließlich im zweiten Arbeitsbereich zu fahren. Demnach ist es dem zweiten Fahrzeug aufgrund der Begrenzung durch die zweite Signalschleife nicht möglich aus dem zweiten Arbeitsbereich herauszufahren, ohne eine Fehlfunktion der zweiten Signalschleife auszulösen.

Lediglich das dritte Fahrzeug mit der Kodierung bzw. der Autorisierung für beide Arbeitsbereiche kann sowohl im ersten als auch im zweiten Arbeitsbereich fahren. Der Übergangsbereich zwischen den beiden Arbeitsbereichen dient dabei als Transferbereich, der eine Fläche ausbildet, in den sich alle drei Fahrzeuge bewegen können, ohne die jeweilige Begrenzung in Form der Signalschleife unerlaubt zu überqueren, denn sie befinden sich sowohl im ersten als auch im zweiten Arbeitsbereich. Das dritte Fahrzeug darf die erste Signalschleife des ersten Arbeitsbereichs nur dann überfahren bzw. überqueren, wenn es sich innerhalb der zweiten Signalschleife des zweiten Arbeitsbereichs, also im Übergangsbereich befindet, und umgekehrt. Anders gesagt, kann das Fahrzeug, wenn es sich im Übergangsbereich befindet, vom ersten Arbeitsbereich in den zweiten Arbeitsbereich umkodiert werden, oder umgekehrt. Im Übergangsbereich erfolgt somit eine Umbuchung des Fahrzeugs zwischen dem ersten und zweiten Arbeitsbereich.

Im Folgenden werden zwei bevorzugte Ausführungsbeispiele der Erfindung anhand der Figuren näher erläutert. Hierbei zeigt
- Fig. 1: eine stark vereinfachte schematische Darstellung eines erfindungsgemäßen Systems zur Begrenzung und Überwachung eines Arbeitsbereichs für mehrere autonom betriebene Fahrzeuge gemäß einer ersten Ausführungsform, und
- Fig. 2: eine stark vereinfachte schematische Darstellung des erfindungsgemäßen Systems gemäß einer zweiten Ausführungsform.

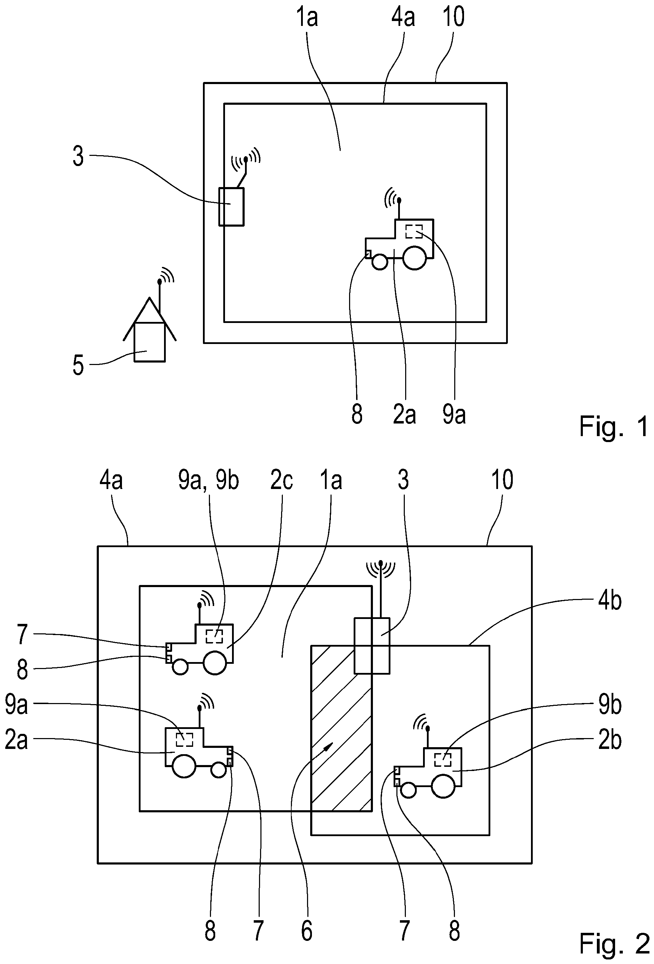

Gemäß Fig. 1 ist eine erste Ausführungsform eines Systems zur Begrenzung und Überwachung eines Arbeitsbereichs 1a für zumindest ein autonom betriebenes Fahrzeug 2a gezeigt. Das System umfasst eine separat angeordnete Sende- und Empfängereinheit 3, die signaltechnisch mit einer als metallische Signalleitung ausgebildeten Signalschleife 4a verbunden ist, wobei die Signalschleife 4a den Arbeitsbereich 1a begrenzt. Der Arbeitsbereich 1a ist Teil eines Feldes 10, beispielsweise eines Kornfeldes, welches von dem Fahrzeug 2a, das ein landwirtschaftliches Nutzfahrzeug sein kann, zur Bearbeitung des Arbeitsbereichs 1a befahren wird. Im vorliegenden Beispiel umfasst das System nur ein einziges Fahrzeug 2a, das innerhalb des Arbeitsbereichs 1a angeordnet ist und autonom darin betrieben wird.

Die Sende- und Empfängereinheit 3 erzeugt vorliegend ein analoges Ausgangs-Signal, welches zur Überwachung des Arbeitsbereichs 1a kontinuierlich durch die Signalschleife 4a gesendet wird. Das Ausgangs-Signal wird nach einem Durchlauf durch die Signalschleife 4a empfängerseitig von der Sende- und Empfängereinheit 3 als Eingangs-Signal empfangen, wobei das Eingangs-Signal mit dem ursprünglich eingeleiteten Ausgangs-Signal verglichen wird. Mit anderen Worten werden die beiden Signale überlagert, um eine mögliche Abweichung festzustellen. Bei einem fehlerfreien Verlauf des Ausgangs-Signals durch die Signalschleife 4a liegt nach einem Vergleich keine Abweichung zwischen dem Ausgangs-Signal und dem Eingangs-Signal vor. Demgegenüber stellt die Sende- und Empfängereinheit 3 eine Abweichung fest, wenn das Ausgangs-Signal nicht identisch zum Eingangs-Signal ist. Dann liegt innerhalb der Signalschleife 4a eine Fehlfunktion vor, beispielsweise eine Unterbrechung, eine Störung oder ein Ausfall des Signals innerhalb der Signalschleife 4a. Eine Fehlfunktion wird ferner erkannt, wenn das Fahrzeug 2a die Signalschleife 4a berührt oder überquert.

Anhand dieser Feststellung zur Fehlfunktion wird von der Sende- und Empfängereinheit 3 ein Sicherungsablauf für den autonomen Fahrbetrieb des Fahrzeugs 2a eingeleitet, der den Fahrbetrieb des Fahrzeugs 2a beeinflusst. Ein Sicherungsablauf kann beispielsweise das Senden eines Befehlssignals an das zumindest eine Fahrzeug 2a und/oder das Senden eines Befehlssignals an eine externe, das heißt eine außerhalb der Signalschleife 4a angeordnete Empfangsstation 5 sein, die beispielsweise eine Einrichtung eines Betreibers des Fahrzeugs 2a sein kann. Vorliegend sind die Empfangsstation 5 und das Fahrzeug 2a zum Datenaustausch über eine Funkverbindung mit der Sende- und Empfängereinheit 3 gekoppelt. Mittels des Befehlssignals kann beispielsweise ein Not-Halt oder ein Deaktivieren des Fahrzeugs 2a ausgelöst werden.

Das Fahrzeug 2a umfasst vorliegend eine Sensoreinheit 8, um das Ausgangs-Signal der Signalschleife 4a zu detektieren. Bei Annäherung an die Signalschleife 4a kann das Fahrzeug 2a das Ausgangs-Signal der Signalschleife 4a erfassen. Ferner ist das Fahrzeug 2a in den Arbeitsbereich 1a mit einer Kodierung 9a kodiert. Dies bedeutet, dass das Fahrzeug 2a derart eingerichtet ist, dass es anhand des von der Sensoreinheit 8 erfassten Ausgangs-Signal feststellen kann, ob es sich innerhalb des durch die Signalschleife 4a begrenzten Arbeitsbereichs 1a befindet. Überfährt das Fahrzeug 2a die Signalschleife 4a, kann es außerdem detektieren, ob es sich innerhalb oder außerhalb des Arbeitsbereichs 1a befindet, wodurch der Fahrbetrieb des Fahrzeugs 2a deaktiviert oder derart angepasst werden kann, dass das Fahrzeug 2a zurück in den Arbeitsbereich 1a fährt. Die Sensoreinheit 8 kann dazu mit einer - hier nicht gezeigten - Steuereinheit verbunden sein, die die erfassten Daten der Sensoreinheit 8 auswertet und dementsprechend auf den Fahrbetrieb des Fahrzeugs 2a einwirken kann.

Stellt das Fahrzeug 2a fest, dass es sich nicht mehr im Arbeitsbereich 1a befindet oder gerade die Signalschleife 4a überquert hat, wird eine Fehlfunktion der Signalschleife 4a erkannt und darauffolgend der Sicherungsablauf eingeleitet. Dadurch wird eine Sicherheit des Systems erhöht und eine Diagnosefähigkeit der Signalschleife 4a realisiert.

Nach Figur 2 ist eine zweite Ausführungsform des Systems zur Begrenzung und Überwachung von mindestens einem Arbeitsbereich 1a, 1b gezeigt. Die Funktionsweise des Systems entspricht im Wesentlichen der Beschreibung zu Fig. 1. Unterscheidend zur ersten Ausführungsform weist das System zwei Arbeitsbereiche 1a, 1b auf, die durch eine jeweilige Signalschleife 4a, 4b begrenzt sind, wobei drei Fahrzeuge 2a, 2b, 2c im ersten und/oder im zweiten Arbeitsbereich 1a, 1b autonom betrieben werden. Die beiden Arbeitsbereiche 1a, 1b sind teilweise überlagernd zueinander angeordnet, wobei im überlagerten Bereich ein Übergangsbereich 6 zwischen den beiden Arbeitsbereichen 1a, 1b ausgebildet ist. Die Sende- und Empfängereinheit 3 ist in einer Schnittstelle zwischen den beiden Signalschleifen 4a, 4b angeordnet.

Im vorliegenden Fall ist das erste Fahrzeug 2a derart kodiert, dass es ausschließlich innerhalb des von der ersten Signalschleife 4a begrenzten ersten Arbeitsbereichs 1a autonom fahren kann. Das erste Fahrzeug 2a weist somit eine erste Kodierung 9a auf. Das zweite Fahrzeug 2b ist demgegenüber derart kodiert, dass es ausschließlich innerhalb des von der zweiten Signalschleife 4b begrenzten zweiten Arbeitsbereichs 1b autonom fahren kann. Das zweite Fahrzeug 2b weist somit eine zweite Kodierung 9b auf. Das dritte Fahrzeug 2c ist sowohl in den ersten Arbeitsbereich 1a als auch in den zweiten Arbeitsbereich 1b kodiert, und kann sich somit in beiden Arbeitsbereichen 1a, 1b autonom bewegen. Das dritte Fahrzeug 2c weist demnach sowohl die erste als auch die zweite Kodierung 9a, 9b auf.

Das dritte Fahrzeug 2c ist derart kodiert, dass ein Übergang des Fahrzeugs 2c von dem ersten Arbeitsbereich 1a in den zweiten Arbeitsbereich 1b und umgekehrt möglich ist. Der Übergang ist dabei nur dann möglich, wenn das dritte Fahrzeug 2c durch den Übergangsbereich 6 hindurch fährt. Im Übergangsbereich 5 befindet sich das jeweilige Fahrzeug gleichzeitig innerhalb der beiden Arbeitsbereiche 1a, 1b. Es ist ferner möglich, dass beispielsweise die erste Kodierung 9a des ersten Fahrzeugs 2a, wenn es sich im Übergangsbereich 6 befindet, durch die zweite Kodierung 9b ersetzt wird, sodass das erste Fahrzeug 2a sozusagen umgebucht wird. Dadurch kann sich das erste Fahrzeug 2a anschließend ausschließlich im zweiten Arbeitsbereich 1b bewegen. Es können somit im Übergangsbereich 6 einzelne Kodierungen 9a, 9b gelöscht oder hinzugefügt werden.

Die Fahrzeuge 2a, 2b, 2c umfassen im zweiten Ausführungsbeispiel ferner einen Sender 7, der dazu eingerichtet ist, das Ausgangs-Signal der jeweiligen Signalschleife 4a, 4b zumindest temporär zu beeinflussen. Dazu sendet der Sender 7 des jeweiligen Fahrzeugs 2a, 2b, 2c ein spezifisches, sich von den anderen Signalen unterscheidendes Signal aus, das dazu vorgesehen ist, das Ausgangs-Signal in der jeweiligen Signalschleife 4a, 4b derart zu verändern bzw. zu beeinflussen, dass die Sende- und Empfängereinheit 3 keine Fehlfunktion der Signalschleife 4a, 4b, sondern vielmehr das Annähern des jeweiligen Fahrzeugs 2a, 2b, 2c an die Signalschleife 4a feststellt. Anders gesagt ist in der Sende- und Empfängereinheit 3 das spezifische Signal hinterlegt, welches im Fall eines Annäherns des Fahrzeugs 2a an die Signalschleife 4a zu erwarten ist. Ferner ist die Sende- und Empfängereinheit 3 dadurch fähig zu erkennen, ob sich das Fahrzeug 2a, 2b, 2c noch innerhalb des jeweiligen Arbeitsbereichs 1a, 1b befindet oder nicht. Außerdem kann das System aufgrund der spezifischen Signale erkennen, welches exakte Fahrzeug 2a, 2b, 2c sich der jeweiligen Signalschleife 4a, 4b genähert hat.

Stellen das Fahrzeug 2a und/oder die Sende- und Empfängereinheit 3 fest, dass eines der Fahrzeuge 2a, 2b, 2c nicht mehr im jeweiligen Arbeitsbereich 1a, 1b vorliegt, wird von der Sende- und Empfängereinheit 3 der Sicherungsablauf eingeleitet.

### Bezugszeichen

- 1a, 1b: Arbeitsbereich
- 2a, 2b, 2c: Fahrzeug
- 3: Sende- und Empfängereinheit
- 4a, 4b: Signalschleife
- 5: Empfangsstation
- 6: Übergangsbereich
- 7: Sender
- 8: Sensoreinheit
- 9a, 9b: Kodierung
- 10: Feld

## Patentansprüche

1. Verfahren zur Begrenzung und Überwachung mindestens eines Arbeitsbereichs (1a) für zumindest ein autonom betriebenes Fahrzeug (2a), wobei eine außerhalb des Fahrzeugs (2a) angeordnete Sende- und Empfängereinheit (3) mit zumindest einer Signalschleife (4a), durch die der jeweilige Arbeitsbereich (1a) begrenzt wird, signaltechnisch verbunden wird, wobei die Sende- und Empfängereinheit (3) zur Überwachung des Arbeitsbereichs (1a) ein Ausgangs-Signal durch die Signalschleife (4a) sendet und mit einem aus der Signalschleife (4a) empfangenen Eingangs-Signal vergleicht, **dadurch gekennzeichnet, dass** die Sende- und Empfängereinheit (3) bei einer Abweichung zwischen dem Ausgangs- und Eingangssignal eine Fehlfunktion der Signalschleife (4a) feststellt und daraus folgend einen Sicherungsablauf für den autonomen Fahrbetrieb des zumindest einen Fahrzeugs (2a) einleitet, wobei mehrere Arbeitsbereiche (1a, 1b) durch eine jeweilige Signalschleife (4a, 4b) begrenzt werden, wobei je mindestens zwei Arbeitsbereiche (1a, 1b) zumindest abschnittsweise überlagernd angeordnet werden, um einen Übergangsbereich (6) zwischen mindestens zwei Arbeitsbereichen (1a, 1b) auszubilden, wobei das jeweilige Fahrzeug (2a) mit einem jeweiligen Sender (7) ausgestattet wird, der dazu eingerichtet ist, das Ausgangs-Signal der jeweiligen Signalschleife (4a, 4b) zumindest temporär zu beeinflussen.

2. Verfahren nach Anspruch 1, **dadurch gekennzeichnet, dass** das Ausgangs-Signal und das Eingangs-Signal ein analoges oder digitales Signal sind.

3. Verfahren nach einem der vorhergehenden Ansprüche, **dadurch gekennzeichnet, dass** das Ausgangs-Signal von der Sende- und Empfängereinheit (3) kontinuierlich oder zu definierten Zeitpunkten versendet wird.

4. Verfahren nach einem der vorhergehenden Ansprüche, **dadurch gekennzeichnet, dass** der Sicherungsablauf ein von der Sende- und Empfängereinheit (3) ergehendes Befehlssignal an das zumindest eine Fahrzeug (2a) oder an eine externe Empfangsstation (5) umfasst.

5. Verfahren nach einem der vorhergehenden Ansprüche, **dadurch gekennzeichnet, dass** das jeweilige Fahrzeug (2a) in zumindest einen der Arbeitsbereiche (1a, 1b) kodiert, also in Bezug auf das jeweilige Ausgangs-Signal der Sende- und Empfängereinheit (3) und der den Arbeitsbereich (1a) begrenzenden Signalschleife (4a) eingebucht wird.

6. System zur Begrenzung und Überwachung mindestens eines Arbeitsbereichs (1a) für zumindest ein autonom betriebenes Fahrzeug (2a), wobei eine außerhalb des Fahrzeugs (2a) angeordnete Sende- und Empfängereinheit (3) mit zumindest einer Signalschleife (4a), die den jeweiligen Arbeitsbereich (1a) begrenzt, signaltechnisch verbunden ist, wobei die Sende- und Empfängereinheit (3) zur Überwachung des Arbeitsbereichs (1a) ein Ausgangs-Signal durch die Signalschleife (4a) sendet und mit einem aus der Signalschleife (4a) empfangenen Eingangs-Signal vergleicht, wobei von der Sende- und Empfängereinheit (3) bei einer Abweichung zwischen dem Ausgangs- und Eingangssignal eine Fehlfunktion der Signalschleife (4a) feststellbar und daraus folgend ein Sicherungsablauf für den autonomen Fahrbetrieb des zumindest einen Fahrzeugs (2a) einleitbar ist, **dadurch gekennzeichnet, dass** mehrere Arbeitsbereiche (1a, 1b) durch eine jeweilige Signalschleife (4a, 4b) begrenzt sind, wobei je mindestens zwei Arbeitsbereiche (1a, 1b) zumindest abschnittsweise überlagernd angeordnet sind, um einen Übergangsbereich (6) zwischen mindestens zwei Arbeitsbereichen (1a, 1b) auszubilden, wobei das jeweilige Fahrzeug (2a) einen Sender (7) umfasst, der dazu eingerichtet ist, das Ausgangs-Signal der jeweiligen Signalschleife (4a, 4b) zumindest temporär zu beeinflussen.

7. System nach Anspruch 6, **dadurch gekennzeichnet, dass** die jeweilige Signalschleife (4a) eine metallische Signalleitung umfasst.

8. System nach Anspruch 7, **dadurch gekennzeichnet, dass** das jeweilige Fahrzeug (2a) in zumindest einen der Arbeitsbereiche (1a, 1b) kodiert, also in Bezug auf das jeweilige Ausgangs-Signal der Sende- und Empfängereinheit (3) und der den Arbeitsbereich (1a) begrenzenden Signalschleife (4a) eingebucht sind.

9. System nach einem der Ansprüche 6 bis 8, **dadurch gekennzeichnet, dass** das jeweilige Fahrzeug (2a, 2b, 2c) eine Sensoreinheit (8) umfasst, um das Ausgangs-Signal der jeweiligen Signalschleife (4a, 4b) zu detektieren.

## Claims

1. Method for delimiting and monitoring at least one working area (1a) for at least one autonomously operated vehicle (2a), wherein a transceiver unit (3) arranged outside the vehicle (2a) is connected using signalling technology to at least one signal loop (4a) which delimits the respective working area (1a), wherein, for the purpose of monitoring the working area (1a), the transceiver unit (3) transmits an output signal through the signal loop (4a) and compares it with an input signal received from the signal loop (4a), **characterized in that**, in the event of a discrepancy between the output signal and the input signal, the transceiver unit (3) identifies a malfunction of the signal loop (4a) and consequently initiates a safety procedure for the autonomous driving mode of the at least one vehicle (2a), wherein a plurality of working areas (1a, 1b) are delimited by a respective signal loop (4a, 4b), wherein at least two working areas (1a, 1b) are arranged so as to be superimposed at least in sections in order to form a transition area (6) between at least two working areas (1a, 1b), wherein the respective vehicle (2a) is equipped with a respective transmitter (7) which is configured to at least temporarily influence the output signal from the respective signal loop (4a, 4b).

2. Method according to Claim 1, **characterized in that** the output signal and the input signal are an analogue or digital signal.

3. Method according to one of the preceding claims, **characterized in that** the output signal is transmitted by the transceiver unit (3) continuously or at defined times.

4. Method according to one of the preceding claims, **characterized in that** the safety procedure comprises a command signal issued by the transceiver unit (3) to the at least one vehicle (2a) or to an external receiving station (5).

5. Method according to one of the preceding claims, **characterized in that** the respective vehicle (2a) is coded in at least one of the working areas (1a, 1b), that is to say is registered with respect to the respective output signal from the transceiver unit (3) and the signal loop (4a) delimiting the working area (1a).

6. System for delimiting and monitoring at least one working area (1a) for at least one autonomously operated vehicle (2a), wherein a transceiver unit (3) arranged outside the vehicle (2a) is connected using signalling technology to at least one signal loop (4a) which delimits the respective working area (1a), wherein, for the purpose of monitoring the working area (1a), the transceiver unit (3) transmits an output signal through the signal loop (4a) and compares it with an input signal received from the signal loop (4a), wherein, in the event of a discrepancy between the output signal and the input signal, the transceiver unit (3) can identify a malfunction of the signal loop (4a) and can consequently initiate a safety procedure for the autonomous driving mode of the at least one vehicle (2a), **characterized in that** a plurality of working areas (1a, 1b) are delimited by a respective signal loop (4a, 4b), wherein at least two working areas (1a, 1b) are arranged so as to be superimposed at least in sections in order to form a transition area (6) between at least two working areas (1a, 1b), wherein the respective vehicle (2a) comprises a transmitter (7) which is configured to at least temporarily influence the output signal from the respective signal loop (4a, 4b).

7. System according to Claim 6, **characterized in that** the respective signal loop (4a) comprises a metallic signal line.

8. System according to Claim 7, **characterized in that** the respective vehicle (2a) is coded in at least one of the working areas (1a, 1b), that is to say is registered with respect to the respective output signal from the transceiver unit (3) and the signal loop (4a) delimiting the working area (1a).

9. System according to one of Claims 6 to 8, **characterized in that** the respective vehicle (2a, 2b, 2cd) comprises a sensor unit (8) for detecting the output signal from the respective signal loop (4a, 4b).

## Revendications

1. Procédé de délimitation et de surveillance d'au moins une zone de travail (1a) pour au moins un véhicule (2a) à fonctionnement autonome, une unité d'émission et de réception (3) disposée à l'extérieur du véhicule (2a) étant reliée de manière signalétique à au moins une boucle de signal (4a) par laquelle est délimitée la zone de travail (1a) respective, l'unité d'émission et de réception (3), en vue de surveiller la zone de travail (1a), émettant un signal de sortie par la boucle de signal (4a) et le comparant avec un signal d'entrée reçu depuis la boucle de signal (4a), **caractérisé en ce que** l'unité d'émission et de réception (3), en cas d'écart entre les signaux de sortie et d'entrée, constatant un défaut de fonctionnement de la boucle de signal (4a) et, en conséquence de quoi, initie un déroulement de sécurité pour le régime de déplacement autonome de l'au moins un véhicule (2a), plusieurs zones de travail (1a, 1b) étant délimitées par une boucle de signal (4a, 4b) respective, au moins deux zones de travail (1a, 1b) étant disposées superposées au moins dans certaines portions afin de former une zone de transition (6) entre au moins deux zones de travail (1a, 1b), le véhicule (2a) respectif étant équipé d'un émetteur (7) respectif, lequel est conçu pour influencer au moins temporairement le signal de sortie de la boucle de signal (4a, 4b) respective.

2. Procédé selon la revendication 1, **caractérisé en ce que** le signal de sortie et le signal d'entrée sont un signal analogique ou numérique.

3. Procédé selon l'une des revendications précédentes, **caractérisé en ce que** le signal de sortie est émis par l'unité d'émission et de réception (3) de manière continue ou à des instants définis.

4. Procédé selon l'une des revendications précédentes, **caractérisé en ce que** le déroulement de sécurité comprend un signal d'instruction émanant de l'unité d'émission et de réception (3) à l'au moins un véhicule (2a) ou à une station de réception (5) externe.

5. Procédé selon l'une des revendications précédentes, **caractérisé en ce que** le véhicule (2a) respectif est codé dans au moins l'une des zones de travail (1a, 1b), c'est-à-dire enregistré en référence au signal de sortie respectif de l'unité d'émission et de réception (3) et à la boucle de signal (4a) qui délimite la zone de travail (1a).

6. Système de délimitation et de surveillance d'au moins une zone de travail (1a) pour au moins un véhicule (2a) à fonctionnement autonome, une unité d'émission et de réception (3) disposée à l'extérieur du véhicule (2a) étant reliée de manière signalétique à au moins une boucle de signal (4a) qui délimite la zone de travail (1a) respective, l'unité d'émission et de réception (3), en vue de surveiller la zone de travail (1a), émettant un signal de sortie par la boucle de signal (4a) et le comparant avec un signal d'entrée reçu depuis la boucle de signal (4a), un défaut de fonctionnement de la boucle de signal (4a) pouvant être constaté par l'unité d'émission et de réception (3) dans le cas d'un écart entre les signaux de sortie et d'entrée et, en conséquence de quoi, un déroulement de sécurité pouvant être initié pour le régime de déplacement autonome de l'au moins un véhicule (2a), **caractérisé en ce que** plusieurs zones de travail (1a, 1b) sont délimitées par une boucle de signal (4a, 4b) respective, au moins deux zones de travail (1a, 1b) étant disposées superposées au moins dans certaines portions afin de former une zone de transition (6) entre au moins deux zones de travail (1a, 1b), le véhicule (2a) respectif étant équipé d'un émetteur (7), lequel est conçu pour influencer au moins temporairement le signal de sortie de la boucle de signal (4a, 4b) respective.

7. Système selon la revendication 6, **caractérisé en ce que** la boucle de signal (4a) respective comprend une ligne de signal métallique.

8. Système selon la revendication 7, **caractérisé en ce que** le véhicule (2a) respectif est codé dans au moins l'une des zones de travail (1a, 1b), c'est-à-dire enregistré en référence au signal de sortie respectif de l'unité d'émission et de réception (3) et à la boucle de signal (4a) qui délimite la zone de travail (1a).

9. Système selon l'une des revendications 6 à 8, **caractérisé en ce que** le véhicule (2a, 2b, 2c) respectif comporte une unité de détection (8) afin de détecter le signal de sortie de la boucle de signal (4a, 4b) respective.
